(19) Europäisches Patentamt
European Patent Office
Office européen des brevets

(11) **EP 3 123 137 B1**

(12) **FASCICULE DE BREVET EUROPEEN**

(45) Date de publication et mention
de la délivrance du brevet:
**08.11.2017 Bulletin 2017/45**

(51) Int Cl.:
*G01M 11/00* (2006.01)          *F24J 2/18* (2006.01)
*F24J 2/16* (2006.01)          *F24J 2/12* (2006.01)
*H04N 5/225* (2006.01)          *H04N 5/232* (2006.01)
*F24J 2/38* (2014.01)

(21) Numéro de dépôt: **15741795.7**

(22) Date de dépôt: **24.03.2015**

(86) Numéro de dépôt international:
**PCT/EP2015/056248**

(87) Numéro de publication internationale:
**WO 2015/144699 (01.10.2015 Gazette 2015/39)**

(54) **INSTALLATION CONCENTRATRICE DE RAYONNEMENT COSMIQUE EQUIPEE D'UN SYSTEME DE CONTROLE DE SURFACE OPTIQUE REFLECHISSANTE**

ANLAGE ZUR KONZENTRATION KOSMISCHER STRAHLUNG MIT REFLEKTIVEM OPTISCHEM OBERFLÄCHENSTEUERUNGSSYSTEM

FACILITY FOR CONCENTRATING COSMIC RADIATION EQUIPPED WITH A REFLECTIVE OPTICAL SURFACE CONTROL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **27.03.2014 FR 1452622**

(43) Date de publication de la demande:
**01.02.2017 Bulletin 2017/05**

(73) Titulaire: **Centre National de la Recherche Scientifique**
**75016 Paris (FR)**

(72) Inventeurs:
• **HENAULT, François**
**F-38100 Grenoble (FR)**
• **CALIOT, Cyril**
**F-66120 Font Romeu (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
EP-A2- 1 717 568          DE-A1- 10 056 077
US-A- 5 477 332          US-A- 5 982 481
US-A1- 2012 293 808          US-A1- 2013 202 215
US-B1- 7 667 833

• GUANGDONG ZHU: "Development of an analytical optical method for linear Fresnel collectors", SOLAR ENERGY, vol. 94, 1 août 2013 (2013-08-01), pages 240-252, XP055158766, ISSN: 0038-092X, DOI: 10.1016/j.solener.2013.05.003
• YULIE WU ET AL: "An improved phase retrieval algorithm for optical aspheric surface measurement", OPTICS COMMUNICATIONS, NORTH-HOLLAND PUBLISHING CO. AMSTERDAM, NL, vol. 284, no. 6, 16 novembre 2010 (2010-11-16), pages 1496-1503, XP028137794, ISSN: 0030-4018, DOI: 10.1016/J.OPTCOM.2010.11.039 [extrait le 2010-11-22]

**Description**

Le domaine de l'invention est celui du contrôle des surfaces optiques réflectrices d'une installation concentratrice de rayonnement cosmique, utilisé par exemple dans une installation concentratrice d'énergie solaire destinée à la production d'électricité hélio-thermique.

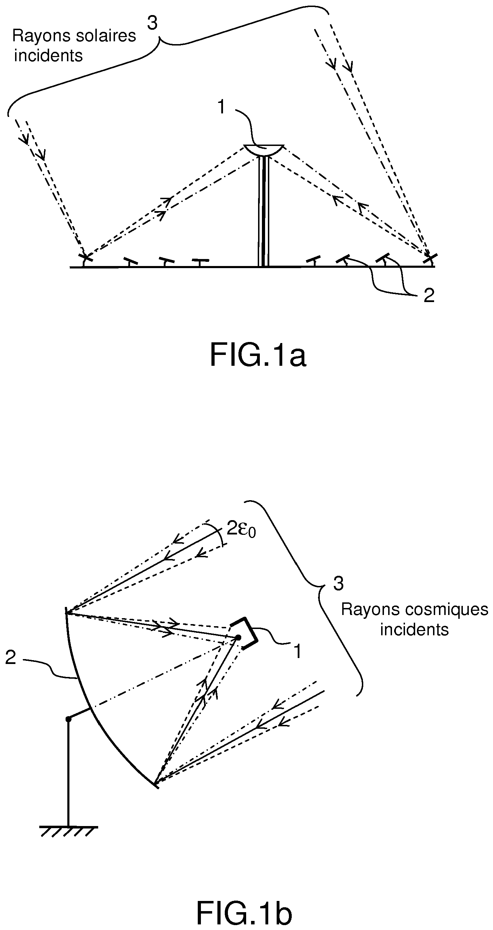

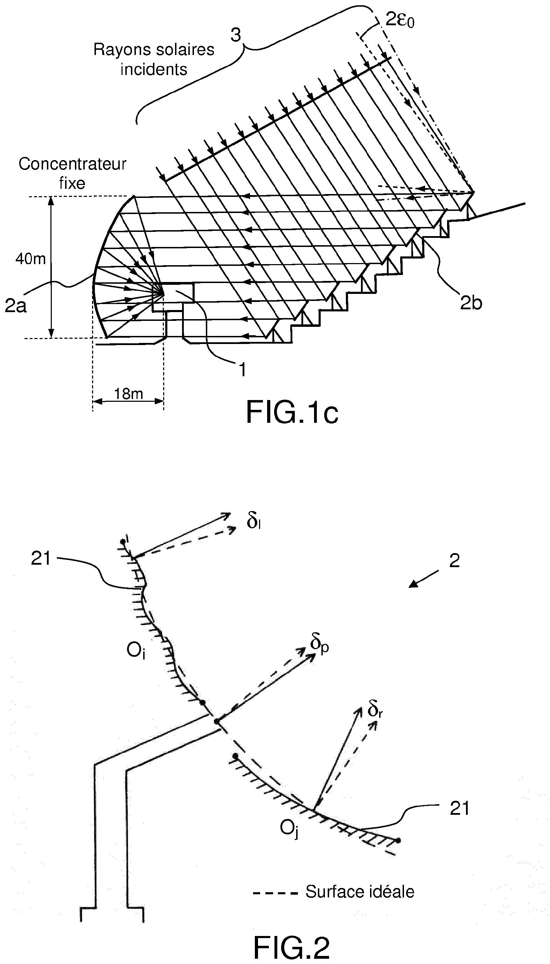

La conversion de l'énergie solaire concentrée en électricité domestique ou industrielle est l'une des voies les plus prometteuses pour la production des énergies renouvelables du XXIème siècle. Les futures centrales hélio-électriques seront typiquement composées d'un récepteur 1 de chaleur installé au sommet d'une tour de plusieurs centaines de mètres de hauteur, et de centaines ou de milliers d'héliostats placés au niveau du sol comportant chacun une surface réflectrice 2 de rayons incidents 3, et assurant le suivi du soleil et la concentration de son rayonnement selon une direction fixe, vers le récepteur 1 comme montré figure 1a ; les héliostats sont orientables, le récepteur est fixe. D'autres types de concentrateur de rayonnement cosmique peuvent être cités tels qu'un concentrateur individuel dirigé vers la source de rayonnement montré figure 1b mais qui concentre le rayonnement vers un récepteur 1 selon une direction variant avec l'orientation du concentrateur (ensemble surface réflectrice concentratrice 2-récepteur 1 : orientable), un four solaire à double réflexion comportant un champ d'héliostats plans orientables comportant chacun une surface plane 2b réflectrice de rayons incidents 3 et une surface concentratrice fixe 2a qui concentre le rayonnement vers un récepteur 1 fixe montré figure 1c, comme celui d'Odeillo en France dont les dimensions sont indiquées sur la figure.

Parmi les nombreux défis technologiques restant à relever figurent ceux du temps et des efforts consacrés au réglage et au contrôle des héliostats ou plus généralement des surfaces optiques réflectrices avant la mise en service opérationnelle de l'installation, et de leur suivi régulier en opération.

Chaque surface concentratrice réflectrice aussi désignée miroir est généralement segmentée en plusieurs facettes ou segments, mais pas nécessairement. Elle est parabolique voire sphérique ou plane comme indiqué dans les exemples précédents.

Les principaux défauts optomécaniques caractéristiques d'une surface réflectrice 2 (ou 2a) concentratrice de rayonnement cosmique, segmentée en facettes réfléchissantes 21 sont représentées sur la figure 2 ; sur cette figure on peut voir deux facettes $O_i$ et $O_j$. Les défauts optomécaniques se répartissent essentiellement en trois catégories:

- Les erreurs de surface locales $\delta l$ qui représentent l'écart par rapport à la forme parabolique ou sphérique idéale de la facette réflectrice. Elles peuvent avoir de nombreuses origines: qualité de fabrication, déformations sous contraintes mécaniques, effets de l'environnement ... Elles sont généralement très variables d'une facette à l'autre.
- Les erreurs d'orientation $\delta r$ des facettes entre elles ; les défauts de positionnement suivant les axes X, Y et Z ont une influence négligeable sur le facteur de concentration.
- Et enfin, l'erreur de pointage globale $\delta p$ de l'héliostat ou du concentrateur, qui se matérialise par l'ajout d'un plan moyen incliné par rapport à l'ensemble des facettes.

Dans le cas d'une surface concentratrice non segmentée en facettes, les erreurs d'orientation $\delta r$ des facettes entre elles n'ont pas lieu d'être ; les défauts optomécaniques proviennent alors des erreurs de surface locales $\delta l$ et de l'erreur de pointage globale $\delta p$.

Les défauts optomécaniques ayant été identifiés, le réglage consiste à corriger la forme des miroirs 2 typiquement au moyen d'actuateurs mécaniques situés à l'arrière, et permettant suivant les cas de modifier leur orientation (assiette), leur courbure moyenne ou des défauts d'ordre supérieur. Or l'expérience acquise sur les installations solaires existantes (par exemple en France la centrale THEMIS à Targasonne ou le four solaire de 1000 kW d'Odeillo) laisse présager que ces opérations de mesure des erreurs et de réglage pourraient demander plusieurs mois ou même années en appliquant les techniques actuelles à une installation d'échelle industrielle de 10 mégawatts ou plus. En outre ces opérations réclament parfois d'occuper le point focal de l'installation réduisant ainsi le temps de fonctionnement de la chaudière.

Ces défauts optomécaniques sont mesurés soit en effectuant des mesures en laboratoire mais alors la forme finale des facettes en fonctionnement n'est pas précisément connue, soit en effectuant des mesures sur le terrain.

La plupart des techniques actuelles telles que l'optimisation du flux collecté par un détecteur situé au point focal de l'installation, ou l'observation à distance d'une cible dans le plan focal perturbent le fonctionnement de l'installation solaire : ces méthodes impliquent en effet d'obstruer l'accès des rayons solaires à la chaudière (=le récepteur de chaleur). Elles sont basées sur une mesure d'éclairements dans le plan cible du récepteur (densités de flux), dont on tire des informations globales sur la qualité des surfaces réfléchissantes, mais ne permettent pas de déterminer notamment les erreurs de surface locales $\delta l$.

Une autre solution consiste à utiliser une technique de déflectométrie (observation d'une grille ou d'un réseau de franges à travers les surfaces réflectrices) mais celle-ci ne fonctionne pas pour des installations telles que décrites en relation avec les figures 1b et 1c, et s'applique à une configuration très différente de celle de l'utilisation finale par exemple en laboratoire, ou pour un couple de points non conjugués. Elle nécessite en outre un traitement d'images complexe, voire impossible.

On connaît aussi la méthode de rétrovisée qui consiste à placer un détecteur au milieu du plan cible à partir duquel on observe directement les images de la source de rayonnement, ou répartitions de luminance sur la surface réfléchissante comme décrit dans la publication de F. Hénault et C. Royère : « Concentration du rayonnement solaire : analyse et évaluation des réponses impulsionnelles et des défauts de réglage de facettes réfléchissantes », J. Optics 1989, vol 20, n°5, pp. 225-240. Mais cette méthode ne permet pas d'effectuer une mesure quantitative des erreurs de surface locales $\delta l$ et ne fournit qu'une mesure grossière des erreurs de d'orientation $\delta r$ des facettes entre elles.

Les documents US 2013/202215 et US 5,982,481 décrivent des systèmes et procédés d'alignement des facettes individuelles d'un concentrateur, utilisant une pluralité de sources de rayonnement artificielles.

Le document US 7,667,833 décrit un procédé d'alignement d'un concentrateur solaire cylindro-parabolique à récepteur linéaire, basé sur la méthode TOP (« Theoretical Overlay Photographic ».

En conséquence, il demeure à ce jour un besoin pour une installation dont les surfaces réflectrices peuvent être contrôlées sans perturber le fonctionnement de l'installation, et ceci en un temps réduit.

Le principe de l'invention consiste à observer, à partir de plusieurs points d'observation situés dans la surface cible d'une installation concentratrice de rayonnement cosmique en fonctionnement, les répartitions de luminance visibles à la surface des surfaces réflectrices, et à en déduire des informations quantitatives sur leurs erreurs de surface locale, de pointage et éventuellement d'orientation.

Plus précisément l'invention a pour objet une installation concentratrice de rayonnement cosmique provenant d'un objet céleste, équipée

- d'une surface optique concentratrice apte à réfléchir le rayonnement cosmique incident vers une surface cible O'X'Y' et susceptible de présenter des erreurs locales de surface et de pointage et d'orientation
- d'un système de contrôle de la surface optique réflectrice.

Elle est principalement caractérisée en ce que le système de contrôle comprend :

- des moyens d'acquisition d'images de la surface optique selon différents points de vue M'$_{mn}$ (x'$_{mn}$, y'$_{mn}$) situés dans la surface cible, m variant de 1 à M, n variant de 1 à N, de manière à obtenir M x N images de la surface optique éclairée par le rayonnement cosmique, avec M points de vue selon X' et N points de vue selon Y', avec M>1, N>1, M.N$\geq$30,
- et une unité de traitement des M.N images acquises adaptée pour

  ○ calculer les pentes $\delta\Delta(P)/\delta x$ et $\delta\Delta(P)/\delta y$ pour chaque point P(x,y) de la surface optique réflectrice selon :

$$\frac{\partial\Delta(P)}{\partial x} = g_X \, \varepsilon_0 \, \frac{\displaystyle\sum_{m=1}^{M}\sum_{n=1}^{N} \text{sign}(x'_{mn}) \, L(M'_{mn}, P)}{\displaystyle\sum_{m=1}^{M}\sum_{n=1}^{N} L(M'_{mn}, P)}$$

$$\frac{\partial\Delta(P)}{\partial y} = g_Y \, \varepsilon_0 \, \frac{\displaystyle\sum_{m=1}^{M}\sum_{n=1}^{N} \text{sign}(y'_{mn}) \, L(M'_{mn}, P)}{\displaystyle\sum_{m=1}^{M}\sum_{n=1}^{N} L(M'_{mn}, P)}$$

L(M'$_{mn}$, P) étant la luminance en un point de l'image correspondant au point P(x,y) de la surface optique réflectrice observée selon le point de vue M'$_{mn}$, $\varepsilon_0$ le rayon angulaire apparent de objet céleste, g$_x$ et g$_y$ des coefficients prédéterminés, et

  ○ déterminer à partir de ces pentes $\delta\Delta(P)/\delta x$ et $\delta\Delta(P)/\delta y$, une erreur locale de surface $\Delta P(x,y)$ au point P(x,y) de la surface optique réflectrice.

Les principaux avantages de l'invention sont les suivants:

- Elle permet de mesurer les erreurs de réglage, de pointage et de surface locale des surfaces réflectrices in situ et d'effectuer des contrôles réguliers, sans perturber le fonctionnement de l'installation tel que le processus de production d'énergie hélio-électrique.

- Elle permet de contrôler et de régler l'ensemble des surfaces réflectrices de l'installation en un temps le plus court possible.
- Elle ne nécessite qu'un nombre limité de points d'observation M'$_{mn}$.

Les moyens d'acquisition d'images selon différents points de vue peuvent comporter plusieurs dispositifs d'acquisition d'images respectivement situés en différentes positions fixes ou mobiles dans la surface cible.

La surface cible peut être plane et est alors désignée plan cible.

Selon une caractéristique de l'invention, la surface optique réflectrice à contrôler est orientable. Dans ce cas, les moyens d'acquisition d'images selon différents points de vue comportent au moins un dispositif d'acquisition d'image situé dans la surface cible et des moyens de modification de l'orientation de la surface optique réflectrice à contrôler.

La surface optique réflectrice est typiquement segmentée en facettes et l'unité de traitement est adaptée pour déterminer en outre des erreurs d'orientation des facettes entre elles et une erreur de réglage de chaque facette.

La surface optique réflectrice est par exemple montée dans un héliostat.

La surface optique réflectrice est parabolique, voire sphérique ou même plane.

L'installation concentratrice de rayonnement cosmique peut comporter plusieurs surfaces optiques réflectrices.

Le rayonnement est par exemple solaire ou lunaire.

L'invention a aussi pour objet une centrale à tour ou un concentrateur individuel ou un four solaire à double réflexion ou un télescope de Cherenkov comportant une installation concentratrice de rayonnement cosmique telle que décrite.

D'autres caractéristiques et avantages de l'invention apparaîtront à la lecture de la description détaillée qui suit, faite à titre d'exemple non limitatif et en référence aux dessins annexés dans lesquels :

les figures 1 déjà décrites représentent schématiquement différents types d'installation concentratrice de rayonnement solaire, une centrale à tour éclairée par un champ d'héliostats focalisants (fig 1a), un concentrateur individuel dirigé vers le soleil (fig 1b), un four solaire à double réflexion avec un champ d'héliostats plans et un concentrateur fixe (fig 1c),

la figure 2 déjà décrite illustre les principales erreurs caractéristiques d'une installation concentratrice de rayonnement cosmique à surface réflectrice segmentée en facettes,

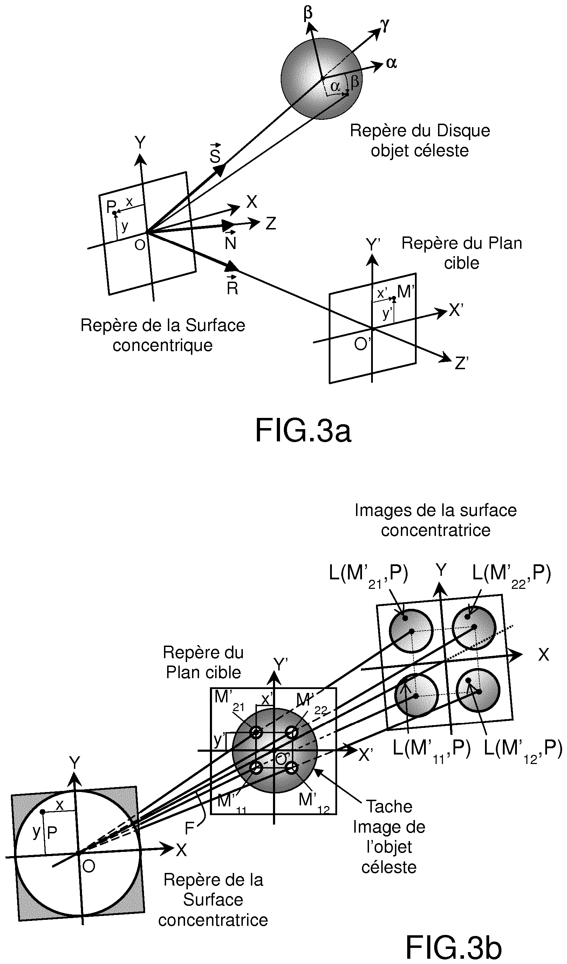

les figures 3 représentent schématiquement les repères de coordonnées et notations scientifiques employés, dans le cas d'une vue d'ensemble comportant la source de rayonnement, la surface concentratrice et le plan cible (fig 3a) et au niveau de l'installation concentratrice avec la surface concentratrice, le plan cible dans lequel sont situés différents points de vue de la surface concentratrice (quatre dans l'exemple de la figure), et le plan des images de la surface concentratrice obtenues à partir de ces points de vue (fig 3b),

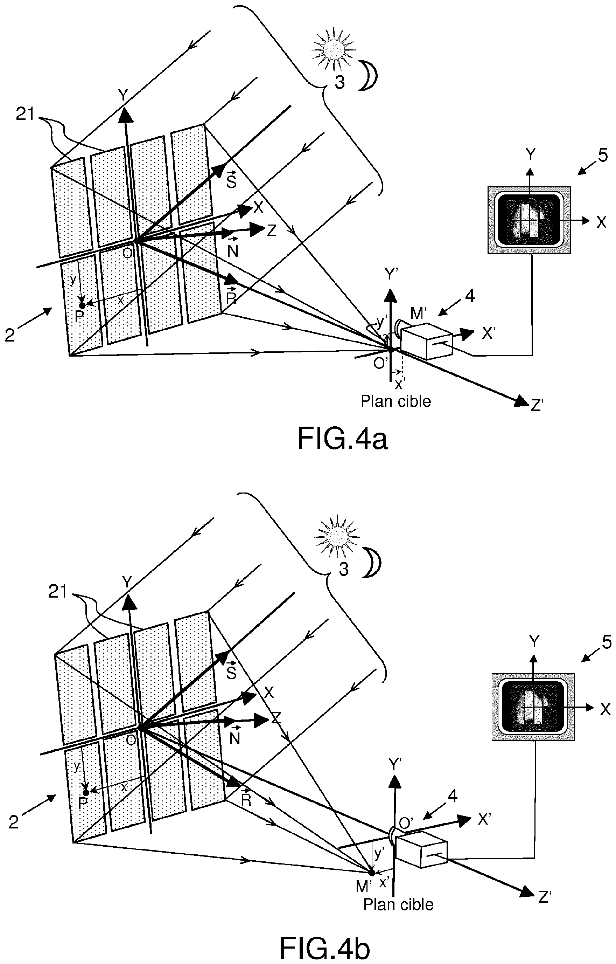

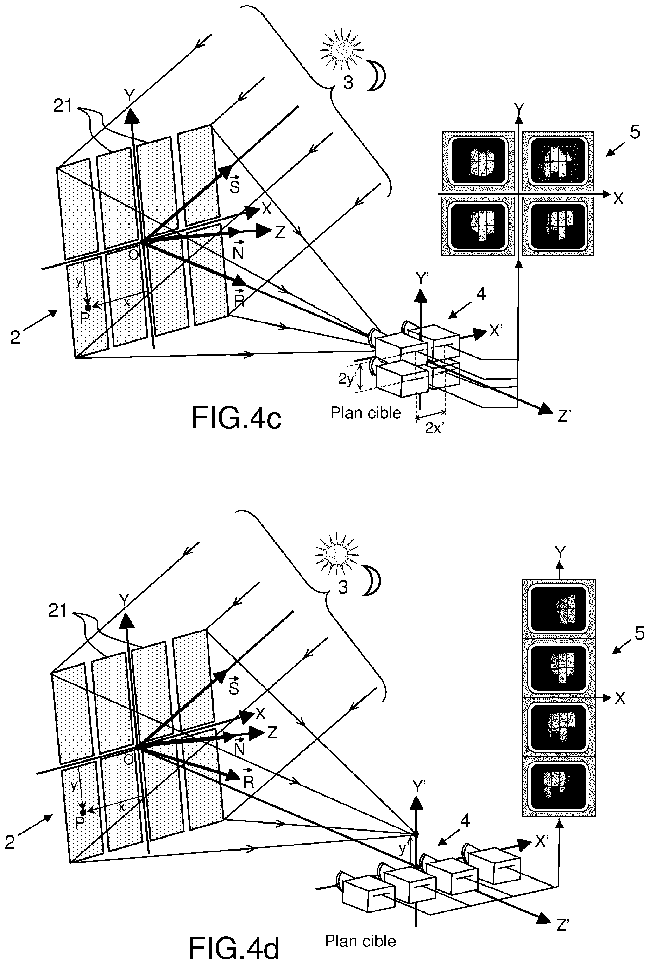

les figures 4 représentent schématiquement différents exemples de modes de réalisation de l'invention dans le cas d'une surface réflectrice segmentée (8 segments ou facettes sur la figure) avec une caméra mobile dans le plan cible (fig 4a), une caméra fixe balayée par la surface réflectrice orientable (fig 4b), plusieurs caméras fixes balayées par la surface réflectrice orientable (fig 4c), plusieurs caméras mobiles balayées par la surface réflectrice orientable (fig 4d),

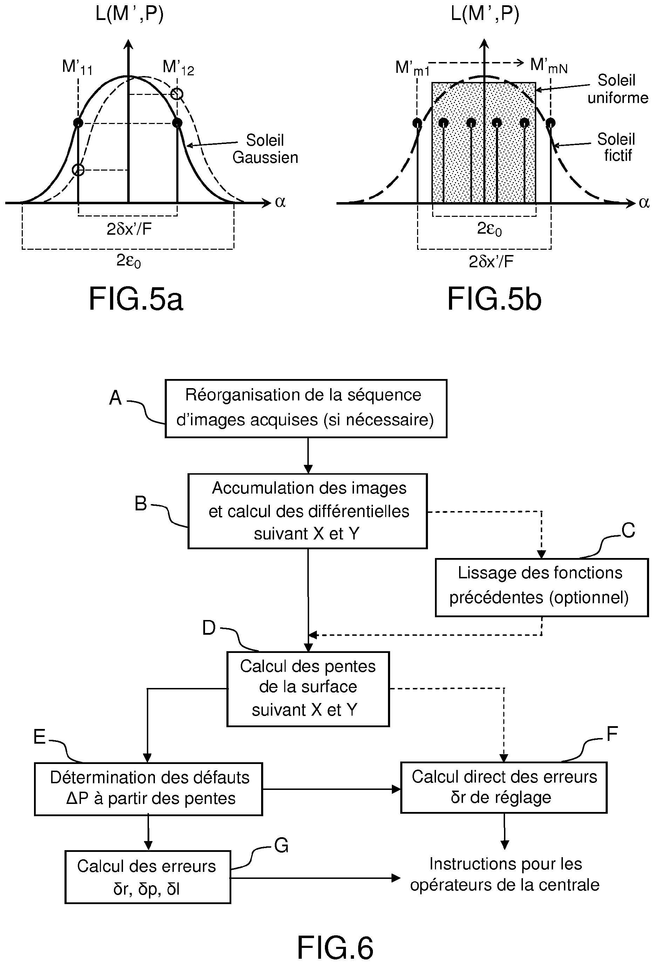

les figures 5 illustrent l'interprétation physique du calcul des défauts optomécaniques selon l'invention à partir d'un soleil théorique gaussien (fig 5a), et d'un soleil uniforme vu dans la pratique (fig 5b),

la figure 6 est un organigramme montrant les étapes d'un exemple de traitement des données acquises à partir de différents points de vue selon l'invention,

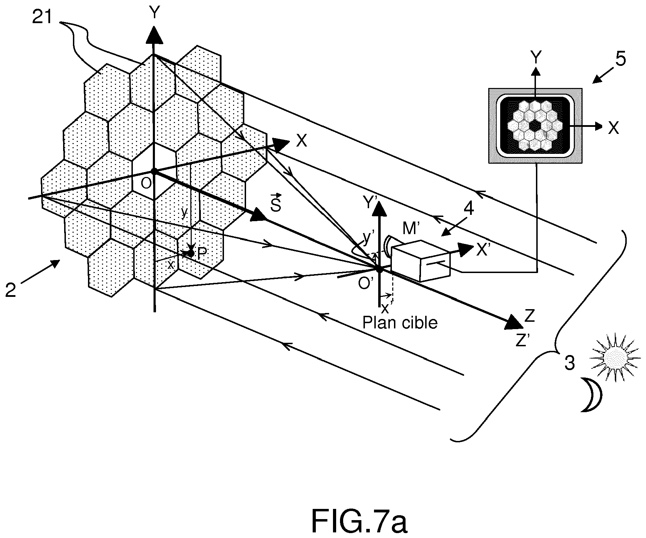

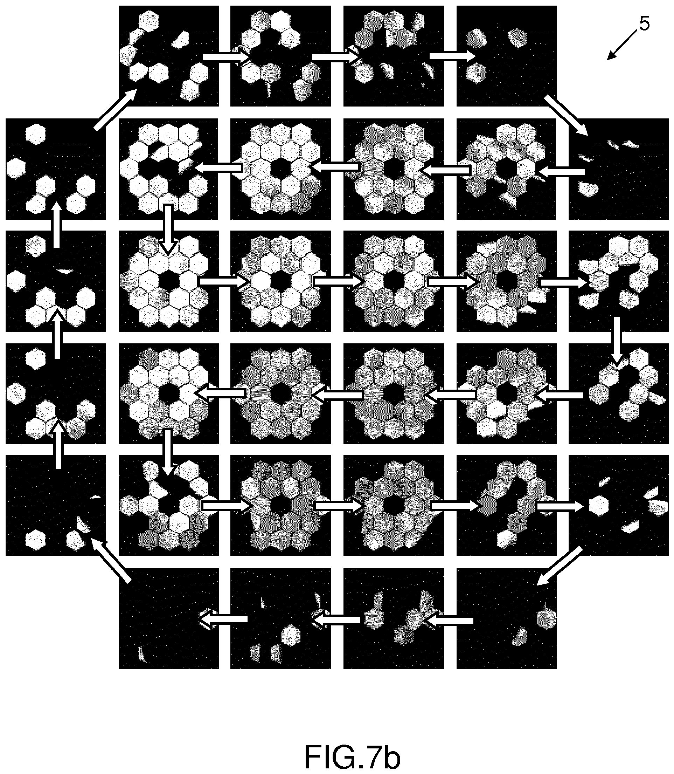

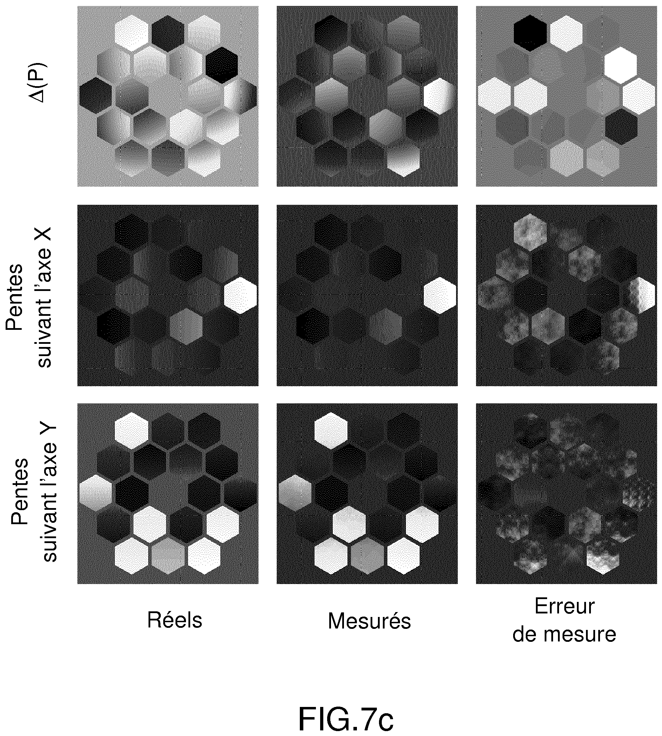

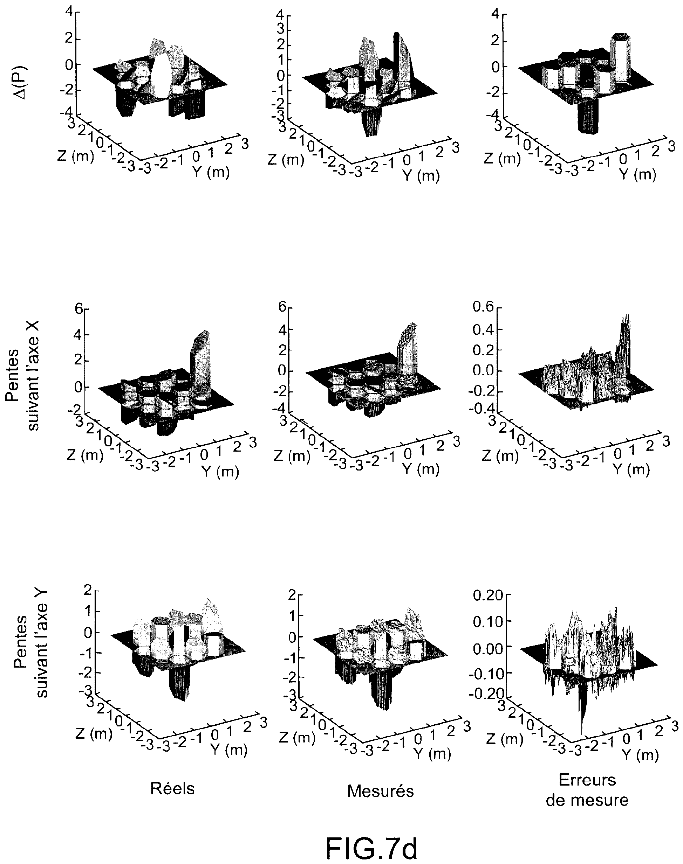

les figures 7 illustrent les résultats obtenus pour une installation selon l'invention telle que décrite figure 1b à surface réflectrice segmentée orientable associée à une caméra, et représentée schématiquement (fig 7a), avec une séquence d'images (fig 7b) obtenues par la caméra, les erreurs réelles, mesurées et les erreurs de mesure correspondantes présentées en fausses couleurs (fig 7c) et en trois dimensions (fig 7d),

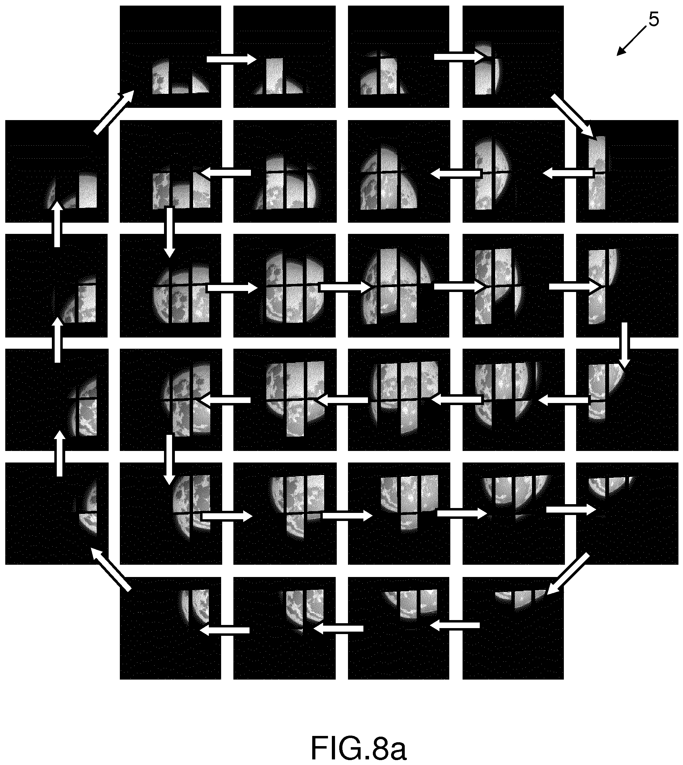

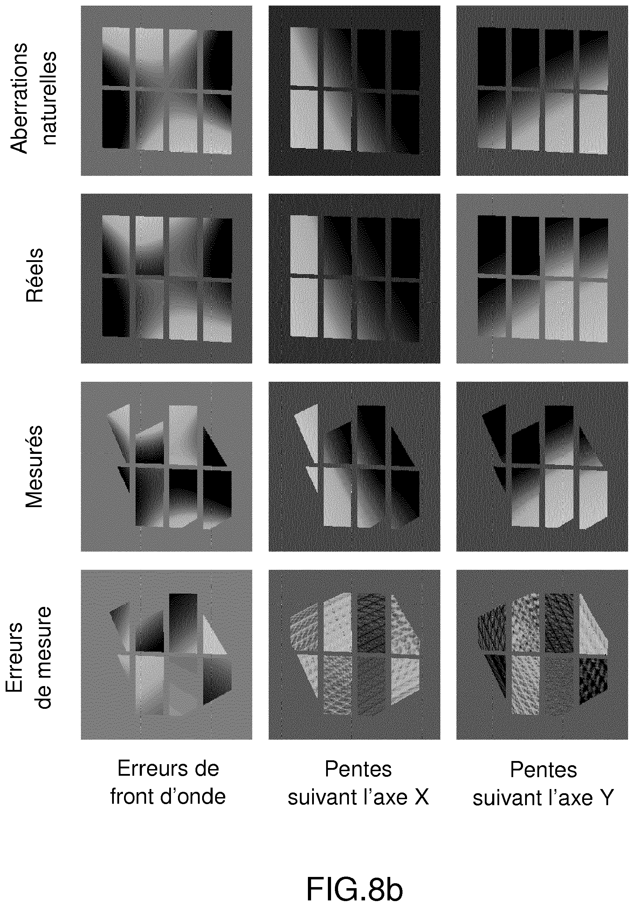

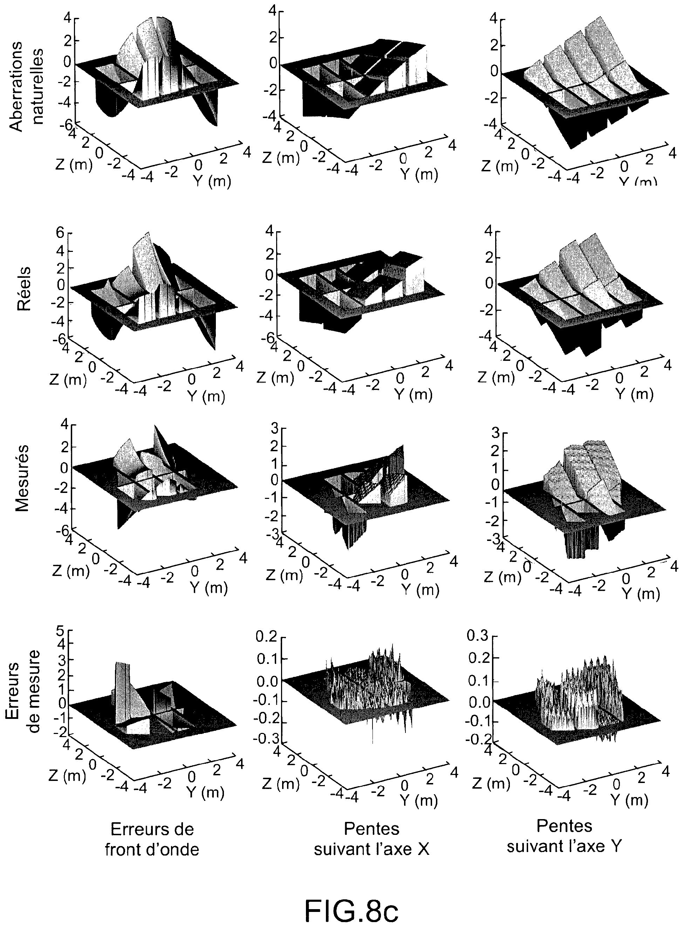

les figures 8 illustrent les résultats obtenus pour une installation selon l'invention telle que décrite figure 1a, à surface réflectrice segmentée orientable associée à une caméra, et représentée schématiquement figures 4, avec une séquence d'images (fig 8a) obtenues par la caméra, les erreurs réelles, mesurées et les erreurs de mesure correspondantes présentées en fausses couleurs (fig 8b) et en trois dimensions (fig 8c).

D'une figure à l'autre, les mêmes éléments sont repérés par les mêmes références.

Dans la suite de la description on prendra principalement comme exemple d'installation, une installation concentratrice d'énergie solaire. Mais l'invention s'applique également à une installation concentratrice d'énergie lunaire ainsi qu'aux réseaux de télescopes Cherenkov utilisés pour l'astrophysique des hautes énergies, dont les spécifications sont voisines de celles exigées pour un concentrateur solaire. On prend aussi comme exemple de surface cible, un plan cible.

Les principaux systèmes de coordonnées et notations employés par la suite sont indiqués sur les figures 3. Trois repères sont essentiellement utilisés:

- Le repère $O\alpha\beta\gamma$ des coordonnées angulaires dans le ciel, où l'axe $O\gamma$ est dirigé suivant le vecteur $\vec{S}$ vers le centre du soleil (ou vers tout autre objet céleste visé), et où les directions voisines sont désignées par leurs coordonnées angulaires $(\alpha,\beta)$. En pratique $\alpha$ et $\beta$ sont considérés comme des quantités du premier ordre par rapport à 1.
- Le repère OXYZ qui est associé à la surface concentratrice mobile ou fixe, où O est le centre de la surface réflectrice, l'axe OZ dirigé suivant le vecteur $\vec{N}$ est normal à la surface en O, et OX et OY sont des axes perpendiculaires à OZ. Les points P de la surface réflectrice sont définis par leurs coordonnées cartésiennes (x,y,z).
- Le repère O'X'Y'Z' qui est associé à un plan cible O'X'Y' (où est placé le récepteur). Le point O' est défini comme l'intersection du rayon solaire réfléchi sur la surface réflectrice en O et dirigé suivant le vecteur $\vec{R}$, avec le plan cible ; F étant la distance focale de la surface concentratrice, on a OO'=F L'axe O'Z' est normal au plan cible, et n'est pas nécessairement parallèle au vecteur $\vec{R}$ (cas des héliostats d'une centrale à tour notamment). De même, les axes OZ et O'Z' ne sont généralement pas confondus, sauf dans le cas de concentrateurs directement pointés vers le soleil, dont un exemple est représenté sur la figure 5. Les points M' du plan cible sont définis par leurs coordonnées cartésiennes (x', y').

On notera que les vecteurs $\vec{S}$, $\vec{N}$ et $\vec{R}$ sont liés entre eux par la première loi de Descartes pour la réflexion.

Comme on peut le voir figure 3b, certains points M' sont notés $M'_{mn}$, où les indices m et n désignent un nombre limité de "points de vue" différents situés dans le plan cible, avec $1 \leq m \leq M$ suivant l'axe O'X' et $1 \leq n \leq N$ suivant l'axe O'Y'. Les coordonnées du point $M'_{mn}$ dans le plan cible sont notées $(x'_{mn},y'_{mn})$. Dans l'exemple de la figure 3b, on a quatre points d'observation : M = N = 2.

Le principe général de l'invention consiste à observer à partir de différents points de vue $M'_{mn}$, les répartitions de luminance $L(M'_{mn},P)$ réfléchies par l'ensemble des points P de la surface réflectrice que l'on souhaite contrôler puis régler régulièrement. En ces points d'observation $M'_{mn}$ sont placés des dispositifs d'observation tels que des caméras CCD de type commercial éventuellement équipées de zoom, voire même de simples webcams, visant les surfaces réflectrices à contrôler, $M'_{mn}$ désignant la position du dispositif d'observation dans le plan cible. Ces points d'observation sont bien sûr situés à l'intérieur de la tache de l'image du soleil (plus généralement de l'objet céleste) dans le plan cible ; parmi ces points d'observation, on peut trouver le point de concentration de la surface concentratrice, mais pas nécessairement. Par extension on désigne aussi par $M'_{mn}$ le dispositif d'observation correspondant. Par la suite on prend comme exemple de dispositif d'observation, une caméra.

Plusieurs stratégies d'observation sont possibles, différant essentiellement par le nombre et le type de mouvements appliqués aux surfaces réflectrices et/ou aux caméras elles-mêmes : caméra mobile dans le plan cible, caméra fixe balayée par la surface réfléchissante mobile, système composé de plusieurs caméras fixes, stratégie d'observation "mixte".

❖ Caméra mobile dans le plan cible.

Selon un premier mode de réalisation de l'invention montré figure 4a, des images représentant les distributions 5 de luminance $L(M'_{mn},P)$ pour l'ensemble des points P, sont accumulées en déplaçant une seule caméra (moyens d'acquisition d'images 4 = une seule caméra) sur différents points d'observation $M'_{mn}$ situés dans le plan cible, au moyen de mécanismes associés à cette caméra permettant de balayer tous les points de vue $M'_{mn}$. Cette solution présente cependant des inconvénients en termes de complexité mécanique et de temps nécessaire pour déplacer la caméra dans le plan O'X'Y', pendant lequel l'orientation de l'héliostat et donc de la surface réflectrice 2 aura pu être modifiée afin de poursuivre la course du Soleil. De plus, dans le cas d'un concentrateur parabolique mobile ou fixe comme pour un télescope Cherenkov, elle perturbe le fonctionnement du récepteur.

❖ Caméra fixe balayée par le système concentrateur d'énergie.

Une alternative à la solution précédente n'impliquant qu'une seule caméra est illustrée figure 4b. Elle consiste à profiter du fait que pour de petits changements d'orientation de l'héliostat et donc de la surface réflectrice 2 dans son mouvement de suivi du soleil, les distributions 5 de luminance observées sont identiques à celles que l'on obtiendrait en déplaçant la caméra jusqu'à un point d'observation fictif $M'_{mn}$ situé dans le plan cible. Il en résulte un avantage décisif par rapport à la solution précédente, car les héliostats plans ou focalisants sont par construction capables de suivre la course du soleil dans le ciel avec un taux de rafraîchissement de l'ordre de quelques Hz, permettant ainsi d'effectuer une séquence complète d'acquisition des images $L(M'_{mn},P)$ 5 beaucoup plus rapidement.

Il est également possible de profiter de la mobilité des héliostats (et donc des surfaces réflectrices 2) commandés en boucle ouverte pour les diriger vers un plan cible O'X'Y' indépendant du récepteur. Dans le cas d'une centrale tour, le plan cible peut en effet être situé à quelques mètres en dessous du volume focal de l'installation, permettant aux héliostats à contrôler ou à régler d'y être dirigés individuellement à tour de rôle sans perturber le fonctionnement du récepteur de chaleur. De même, dans le cas d'un héliostat plan éclairant le concentrateur fixe d'un four solaire à double réflexion, les points cibles peuvent être situés dans des directions différentes de celle de l'axe du concentrateur, et localisés à des distances suffisamment éloignées dans le paysage. La stratégie est également applicable aux concentrateurs solaires fixes ou dirigés vers le soleil, pour peu que les points d'observation M'$_{mn}$ soient situés dans le volume focal mais en dehors du récepteur qui est lui-même situé au centre de ce volume focal. Cette restriction ne s'applique pas aux télescopes collecteurs du rayonnement Cherenkov, car le centre du plan image y est traditionnellement laissé libre pour installer leurs systèmes de calibration. Signalons enfin que dans tous les cas, il est possible de tirer profit du mouvement naturel de l'objet observé (typiquement soleil ou pleine lune), afin de faire l'économie de l'une des deux rotations nécessaires à son suivi dans le ciel. De plus, cette option permet d'automatiser la séquence des prises de vues en les synchronisant (par un moyen électronique ou informatique) avec les mouvements des héliostats: ainsi peut-on raccourcir sensiblement le temps d'acquisition des images.

Cette stratégie d'observation est bien adaptée à un concentrateur solaire fixe d'un four solaire, ou aux concentrateurs directement asservis sur le soleil. Dans ces deux cas (comme dans celui des télescopes Cherenkov), il est préférable d'effectuer le contrôle des surfaces réflectrices de nuit par exemple sur la pleine lune, sans perturber le fonctionnement diurne de ces systèmes. Les télescopes Cherenkov trop sensibles aux lumières parasites, ne peuvent effectuer d'observations scientifiques durant les nuits de pleine lune : ainsi le contrôle pourra-t-il être effectué durant la nuit, avec un système d'observation simplifié et sans perturber le fonctionnement normal du télescope.

Dans le cas du concentrateur fixe d'un four solaire, le balayage angulaire est réalisé en pratique au moyen des héliostats plans qui éclairent le concentrateur (cela suppose que leurs réglages aient eux-mêmes été optimisés au préalable).

❖ Système composé de plusieurs caméras fixes

Une alternative radicale aux deux cas précédents est illustrée sur la figure 4c ; elle consiste à disposer dans le plan cible O'X'Y' autant de caméras fixes que de points de vue M'$_{mn}$ nécessaires (moyens d'acquisition d'images 4 = M.N caméras fixes), permettant ainsi d'acquérir les différentes répartitions de luminance L(M'$_{mn}$,P) 5 simultanément. Cette stratégie d'observation présente les avantages et inconvénients suivants.

Avantages :

- La simultanéité des acquisitions d'images 5 permet de figer les mouvements du soleil ou de la lune dans le ciel et ainsi d'améliorer la précision de mesure globale.
- Elle permet également d'éviter des traitements numériques lourds destinés à corriger les images L(M'$_{mn}$,P) 5 en fonction de leur instant d'acquisition si le temps de mesure nécessaire aux stratégies décrites précédemment est trop long (typiquement supérieur à 5 minutes).

Inconvénients :

- L'inconvénient majeur est indiscutablement le coût total du matériel nécessaire, résultant de l'augmentation significative du nombre de caméras nécessaires.
- De plus, pour obtenir les acquisitions simultanées, il devient nécessaire d'assurer la synchronisation temporelle des acquisitions effectuées par les différentes caméras, compliquant ainsi le contrôle informatique du système de mesures.
- Enfin, les axes de visée des caméras doivent être réglés en orientation afin de converger vers les surfaces réflectrices contrôlées, impliquant éventuellement une complexité mécanique supplémentaire.

De même que la précédente, cette stratégie convient particulièrement bien aux héliostats des centrales à tour à simple réflexion. Elle semble plus difficile à mettre en oeuvre sur les concentrateurs solaires directement pointés sur le soleil ou les fours solaires à double réflexion (respectivement montrés figures 1b et 1c), en raison du nombre nécessaire de caméras disposées au voisinage du volume focal.

❖ Stratégie d'observation "mixte"

Afin de bénéficier des avantages offerts par les deux modes de réalisation précédents (utilisation d'un nombre limité de caméras sans sacrifier la rapidité de la séquence complète d'acquisition), il semble naturel de combiner les deux stratégies ainsi qu'illustré par exemple sur la figure 4d : ici une ligne de caméras fixes est disposée suivant l'axe horizontal O'X' en des points d'observation que l'on notera M'$_{m1}$.(moyens d'acquisition d'images4 = 4 caméras en ligne).

Les points de vue supplémentaires M'$_{mn}$ (avec n ≠ 1) sont obtenus au moyen du mouvement de rotation en altitude des héliostats. Alternativement les caméras peuvent être alignées verticalement et balayées par des mouvements de rotation en azimut. Plus généralement, on peut combiner une répartition discrète des caméras d'observation dans le plan cible O'X'Y' avec une séquence de balayage des héliostats optimisée en altitude et en azimut.

La stratégie d'observation mixte semble parfaitement applicable aux héliostats focalisants d'une centrale à tour ou de la surface concentratrice d'un four solaire, et aux héliostats plans d'un four solaire à double réflexion. Dans le cas d'un four solaire, on forme des images de la surface concentratrice pour contrôler les défauts de cette surface concentratrice, et on forme des images des héliostats plans de manière à contrôler leurs défauts.

Notons pour finir que la contrainte de ne pas perturber le fonctionnement de l'installation solaire peut être respectée grâce à deux stratégies différentes:

1)- Utilisation d'un plan cible distinct de celui du récepteur, et

2)- Mesures effectuées de nuit en visant la Pleine Lune. La pleine lune est en effet également une excellente source observable pour le réglage et le contrôles d'héliostats plans ou focalisants pilotés en boucle ouverte : l'observation de la pleine lune, dont le diamètre apparent est voisin de celui du soleil, permet en effet de réaliser toutes les opérations de caractérisation des défauts optomécaniques durant la nuit, permettant ainsi d'effectuer l'optimisation des miroirs et des héliostats encore plus rapidement.

Les sources observées peuvent indifféremment être le soleil durant le jour, ou la pleine lune durant la nuit.

Quelque soit le mode de réalisation de l'invention, il présente les avantages suivants :

- un nombre limité de caméras CCD de type commercial, voire même de simples webcams.
- Mesure des surfaces réflectrices in situ en utilisant au mieux leurs capacités naturelles de suivi des mouvements du soleil ou de la lune.

La suite du processus de contrôle et de réglage des surfaces réflectrices consiste principalement en un traitement numérique innovant des données acquises, qui fait l'objet de la section suivante.

Le principe général de l'exploitation des images peut être expliqué intuitivement à partir des figures 3b et 5. Supposons dans un premier temps que la surface apparente du soleil se présente comme un disque de profil Gaussien caractérisé par la loi de luminance angulaire L($\alpha,\beta$):

$$L(\alpha,\beta) = L_0 \exp\left[(\alpha^2 + \beta^2)/2\varepsilon_0^2\right], \qquad (1)$$

où $\varepsilon_0$ est le rayon angulaire apparent du soleil (aussi montré figures 1), et $L_0$ la luminance en son centre. Considérons maintenant un dispositif d'observation M'$_{mn}$ dont la position est repérée par les coordonnées (x'$_{mn}$,y'$_{mn}$) dans le plan cible O'X'Y', et à partir duquel sont visés simultanément tous les points P de la surface réflectrice. Si les défauts optomécaniques du miroir au point P de coordonnées (x,y), incluant les erreurs de surface locale, d'orientation et de pointage, sont représentés par la fonction $\Delta(P) = \Delta(x,y)$, alors les rayons issus du soleil réfléchis au point P et recueillis par le dispositif d'observation M'$_{mn}$ ont pour coordonnées angulaires dans le repère O$\alpha\beta\gamma$ de la figure 3a :

$$\alpha \approx -\frac{x'_{mn}}{F} + 2\frac{\partial\Delta(P)}{\partial x}$$

$$\beta \approx -\frac{y'_{mn}}{F} + 2\frac{\partial\Delta(P)}{\partial y} \qquad (2)$$

où F est la distance focale de la surface réflectrice concentratrice, et où le couple ($\alpha,\beta$) et les angles d'incidence sur le miroir peuvent être considérés comme petits dans le cadre d'une approximation du premier ordre (Ceci est toujours vérifié pour les angles $\alpha$ et $\beta$; lorsque ce n'est pas vérifié pour les angles d'incidence sur les héliostats d'une centrale à tour, cette restriction n'altère en rien les performances). A partir des relations (1-2), on peut alors déterminer l'expression des luminances solaires L(M'$_{mn}$,P) observées des points M'$_{mn}$ et en déduire les relations qui les lient aux dérivées partielles des défauts optomécaniques du miroir $\Delta(P)$. L(M'$_{mn}$,P) est la luminance en un point de l'image correspondant au point P(x,y) de la surface optique observée selon le point de vue M'$_{mn}$.

Dans le cas particulier de quatre points de vue M'$_{11}$, M'$_{12}$, M'$_{21}$ et M'$_{22}$ situés aux coins d'un rectangle dans le plan cible de longueur 2δx' suivant l'axe X' et 2δy' suivant l'axe Y' comme indiqué sur la figure 3b, les coordonnées des quatre points de vue M'$_{11}$, M'$_{12}$, M'$_{21}$ et M'$_{22}$ dans le plan O'X'Y' s'écrivent donc respectivement (-δx',-δy'), (-δx', δy'), (δx',-δy') et (δx',δy'). En reportant ces coordonnées dans les relations (2) puis en insérant ces dernières dans la loi de luminance solaire (1), on obtient un système de quatre équations à deux inconnues δΔ(P)/δx et δΔ(P)/δy :

$$L(M'_{11},P) = L_0 \exp\left[-\frac{1}{2\varepsilon_0^2}\left[\left(2\frac{\partial\Delta(P)}{\partial x}+\frac{\delta x'}{F}\right)^2 + \left(2\frac{\partial\Delta(P)}{\partial x}+\frac{\delta y'}{F}\right)^2\right]\right],$$

$$L(M'_{12},P) = L_0 \exp\left[-\frac{1}{2\varepsilon_0^2}\left[\left(2\frac{\partial\Delta(P)}{\partial x}-\frac{\delta x'}{F}\right)^2 + \left(2\frac{\partial\Delta(P)}{\partial x}+\frac{\delta y'}{F}\right)^2\right]\right],$$

$$L(M'_{21},P) = L_0 \exp\left[-\frac{1}{2\varepsilon_0^2}\left[\left(2\frac{\partial\Delta(P)}{\partial x}+\frac{\delta x'}{F}\right)^2 + \left(2\frac{\partial\Delta(P)}{\partial x}-\frac{\delta y'}{F}\right)^2\right]\right],$$

$$L(M'_{22},P) = L_0 \exp\left[-\frac{1}{2\varepsilon_0^2}\left[\left(2\frac{\partial\Delta(P)}{\partial x}-\frac{\delta x'}{F}\right)^2 + \left(2\frac{\partial\Delta(P)}{\partial x}-\frac{\delta y'}{F}\right)^2\right]\right].$$

En prenant les logarithmes népériens à gauche et à droite du signe = dans chaque relation, on obtient un système linéaire de quatre équations à deux inconnues que l'on résout analytiquement au sens des moindres carrés. On trouve ainsi les relations (3):

$$\frac{\partial\Delta(P)}{\partial x} = -\frac{F\,\varepsilon_0^2}{4\,\delta x'}\log\left[\frac{L(M'_{22},P)}{L(M'_{21},P)}\frac{L(M'_{12},P)}{L(M'_{11},P)}\right]$$

$$\frac{\partial\Delta(P)}{\partial y} = -\frac{F\,\varepsilon_0^2}{4\,\delta y'}\log\left[\frac{L(M'_{22},P)}{L(M'_{12},P)}\frac{L(M'_{21},P)}{L(M'_{11},P)}\right], \qquad (3)$$

D'un point de vue physique, le principe de la méthode consiste à utiliser le profil de luminance du disque solaire (jusqu'ici supposé Gaussien), décentré par rapport aux directions d'observation théoriques définies par les points M'$_{mn}$ sous l'effet des défauts optomécaniques Δ(P). On peut alors calculer ces défauts à partir des différences de luminance mesurées aux points M'$_{mn}$ comme illustré figure 5a. Sur cette figure sont représentées les mesures effectuées en deux points d'observation M'$_{11}$ et M'$_{12}$ sur un miroir bien aligné (=points noirs) et les mesures effectuées sur un miroir désaligné (=points blancs).

Mais en réalité la loi de luminance solaire n'est que rarement Gaussienne, encore que cela se produise sous certaines couvertures nuageuses. Dans le cas d'un profil non gaussien mais monotone décroissant du centre vers le bord, on obtient les relations mathématiques plus générales

$$\frac{\partial\Delta(P)}{\partial x} = g_X\,\varepsilon_0\frac{L(M'_{22},P)-L(M'_{21},P)+L(M'_{12},P)-L(M'_{11},P)}{L(M'_{22},P)+L(M'_{21},P)+L(M'_{12},P)+L(M'_{11},P)}$$

$$\frac{\partial\Delta(P)}{\partial y} = g_Y\,\varepsilon_0\frac{L(M'_{22},P)-L(M'_{12},P)+L(M'_{21},P)-L(M'_{11},P)}{L(M'_{22},P)+L(M'_{21},P)+L(M'_{12},P)+L(M'_{11},P)}, \qquad (4)$$

où $g_X$ et $g_Y$ sont des coefficients de gain suivant les deux axes X et Y. Les valeurs numériques de ces coefficients dépendent évidemment de celles des paramètres $\varepsilon_0$, $\delta x$' et $\delta y$', mais également de la loi de luminance de l'objet observé au moment des mesures. C'est pourquoi en pratique on détermine les valeurs de $g_X$ et $g_Y$ expérimentalement.

Enfin, dans le cas le plus courant où le profil du soleil est uniforme comme illustré figure 5b, les équations précédentes ne donnent pas de résultats satisfaisants. En effet, les pentes du profil du soleil qui sont directement liées aux dérivées partielles des pentes de la surface réflectrice $\delta\Delta(P)/\delta x$ et $\delta\Delta(P)/\delta y$ sont trop prononcées.

La solution selon l'invention est basée sur une augmentation du nombre de points d'observation. Cela revient alors à étendre les relations (4) au cas de M x N points d'observation différents de position connue (avec MxN>4), répartis dans le plan cible ; ces M x N points d'observation sont avantageusement situés sur une grille régulière centrée sur le point O'. Ces nouvelles relations s'écrivent alors:

$$\frac{\partial\Delta(P)}{\partial x} = g_X\,\varepsilon_0\,\frac{\displaystyle\sum_{m=1}^{M}\sum_{n=1}^{N}\mathrm{sign}(x'_{mn})\,L(M'_{mn},P)}{\displaystyle\sum_{m=1}^{M}\sum_{n=1}^{N}L(M'_{mn},P)}$$

$$\frac{\partial\Delta(P)}{\partial y} = g_Y\,\varepsilon_0\,\frac{\displaystyle\sum_{m=1}^{M}\sum_{n=1}^{N}\mathrm{sign}(y'_{mn})\,L(M'_{mn},P)}{\displaystyle\sum_{m=1}^{M}\sum_{n=1}^{N}L(M'_{mn},P)} \tag{5}$$

où la fonction analytique sign(u) est égale à u/|u|. L'interprétation physique de ces dernières relations est illustrée sur la figure 5b : grâce à l'accumulation des différents points de vue M'$_{mn}$, elles permettent en effet de transformer le soleil réel, qui se présente le plus souvent comme un disque de luminance uniforme, en un "soleil fictif" aux pentes adoucies. Ce dernier peut être compris comme le produit d'une convolution de la loi uniforme de luminance solaire avec une distribution représentant les positions des points d'observation M'$_{mn}$ dans le plan cible. La courbe de luminance du soleil fictif ainsi générée présente alors des pentes moins prononcées, compatibles avec les équations (5).

La logique d'ensemble du traitement de données est présentée sur l'organigramme de la figure 6. Elle peut être décomposée en six étapes principales.

A) Réorganisation de la séquence des images acquises 5. Cette étape est optionnelle, et dépend en fait des différentes stratégies d'observation qui ont été présentées. Le cas le plus simple est évidemment celui d'une seule et unique caméra mobile dans le plan focal, où les coordonnées x'$_{mn}$ et y'$_{mn}$ sont directement renvoyées par les mécanismes de déplacement de la caméra, et où les relations (5) peuvent être appliquées telles quelles. Dans tous les autres cas, il est nécessaire de reconstituer les coordonnées fictives des points d'observation virtuels M'$_{mn}$ à partir de données caractéristiques de la séquence d'observation, telles que la direction du soleil (elle-même fonction des date et heure de mesure), la position et le mouvement des héliostats, et l'emplacement des caméras dans le plan cible.

B) Sommation des images et de leurs dérivées partielles. Cette étape consiste à calculer les doubles sommes des numérateurs et dénominateur dans les relations (5). En fonction du contour géométrique des surfaces observées, on peut également restreindre le domaine d'observation des points M'$_{mn}$ à une zone circulaire de rayon voisin de F. $\varepsilon$0.

C) Lissage des sommes calculées durant l'étape précédente. Il s'agit ici d'une procédure optionnelle: en fonction du nombre total d'images acquises à partir des points M'$_{mn}$, leurs sommes pondérées calculées durant l'étape précédente peuvent présenter un aspect "granuleux", avec des ruptures de pentes correspondant aux contours de l'image du disque solaire se déplaçant à la surface des miroirs. Il est alors possible de lisser ces images au moyen d'un filtre (Gaussien ou autre) afin "d'adoucir" le profil du soleil fictif de la figure 5b. Cette option s'avère particulièrement utile lorsque le nombre total des points M'$_{mn}$ est peu élevé (typiquement inférieur à 10x10).

D) Calcul des pentes $\partial\Delta(P)/\partial X$ et $\partial\Delta(P)/\partial Y$ de la surface réflectrice. On applique directement ici les relations analytiques définies par les équations (5) afin de mesurer les dérivées partielles $\partial\Delta(P)/\partial X$ et $\partial\Delta(P)/\partial Y$ des défauts optomécaniques. Cela nécessite d'identifier, expérimentalement par exemple, les valeurs optimales des coefficients de gain $g_X$ et $g_Y$ figurant dans les relations (5).

E) Détermination des défauts optomécaniques Δ(P) à partir de leurs pentes. Il est bien sûr possible de déterminer les défauts optomécaniques des miroirs Δ(P) à partir de leurs dérivées partielles déterminées à l'étape précédente. Ceci est en fait un problème classique d'optique adaptative qui fût - entre autres - discuté par Southwell dans la publication : « Wave-front estimation from wave-from slope measurements », J. Opt. Soc. Am. Vol 70, p 998-1006. Ici nous avons utilisé la "reconstruction zonale de type A" décrite dans l'article original.

F) et G) Calcul des erreurs de surface δl, des erreurs d'orientation δr des facettes entre elles ou des erreurs de pointage globales δp du miroir. Ces calculs peuvent être menés de deux manières différentes ainsi que représenté sur l'organigramme : il est d'abord possible (étape G) d'estimer les pentes des différentes facettes du miroir segmenté à partir des défauts de surface Δ(P) mesurés durant l'étape précédente, par exemple au moyen d'une décomposition en polynômes de Zernike permettant de calculer les erreurs angulaires et les défauts de focalisation.

Il est également possible (étape F) de calculer directement les erreurs d'orientation δr en moyennant les valeurs des dérivées partielles ∂Δ(P)/∂X et ∂Δ(P)/∂Y mesurées à la surface des facettes individuelles durant l'étape D. Dans tous les cas les erreurs de pointage δp de la surface réflectrice peuvent être estimées comme les moyennes arithmétiques des erreurs affectant chaque facette individuelle. La principale différence entre les deux procédures qui ont toutes deux été testées dans les simulations numériques présentées à la section suivante, réside essentiellement dans leur temps de calcul effectif, et dans la nature des informations recherchées (erreurs d'alignement, défocalisation, défauts d'ordre supérieur...).

L'ensemble des opérations de mesure des erreurs de surface locale δl, de réglage δr et de pointage δp des surfaces réflectrices des héliostats peut être entièrement automatisé.

Ayant déterminé les erreurs, celles-ci sont converties en instructions de réglage des surfaces réflectrices, qui peuvent être exécutées manuellement ou automatiquement si la surface concentratrice est équipée d'actuateurs commandés.

Afin de valider ces méthodes d'optimisation des surfaces réflectrices, plusieurs simulations numériques des performances de systèmes concentrateurs d'énergie solaire ont été réalisées. Deux types principaux de concentrateurs sont étudiés : tout d'abord un concentrateur parabolique segmenté directement asservi sur le soleil, puis un héliostat focalisant situé dans le champ d'une centrale à tour hélio-électrique.

Cas d'un concentrateur parabolique :

Considérons d'abord le cas d'un concentrateur parabolique directement asservi sur le soleil (Ce cas est également applicable aux télescopes collecteurs de rayonnement Cherenkov) montré figure 7a (qui correspond au cas de la figure 1b pour lequel l'angle d'incidence des rayons cosmiques entre les vecteurs $\vec{S}$ et $\vec{N}$ est quasi nul : on a $\vec{S} = \vec{N} = \vec{R}$) ou éclairé par un ou plusieurs héliostats plans (cas d'un four solaire, figure 1c). Ce sont en général des systèmes concentrateurs de très grande ouverture numérique, dont des paramètres typiques sont donnés dans la deuxième colonne de la table 1 ci-dessous. On indique également dans cette table les caractéristiques principales du dispositif de mesure (zone à balayer et nombre de points de mesure dans le plan cible), ainsi que celles des défauts optomécaniques à mesurer. Dans les simulations numériques, ces défauts sont modélisés par des tirages aléatoires dont les écart-types sont indiqués dans les trois dernières lignes de la table :

On introduit les erreurs aléatoires δr d'alignement des facettes autour des axes X et Y du concentrateur ("tip-tilt") par des lois normales d'écart-type 2 mrad.

On simule enfin les erreurs locales de surface δl des facettes par les écarts sur leurs rayons de courbure R et leurs coefficients d'asphérisation ε indiqués dans la table (en prenant pour cette surface parabolique, les valeurs théoriques du rayon de courbure et du coefficient d'asphérisation respectivement égales à R = 20 m et ε = -1), que l'on choisit comme moyennes des lois d'erreur Gaussiennes. Ceci permet d'introduire des erreurs de forme allant jusqu'au quatrième ordre.

On a δp=0.

Table1 :

| PARAMETRES DES SIMULATIONS NUMERIQUES | Concentrateur parabolique | Héliostat focalisant |
|---|---|---|
| Dimensions de la surface réflectrice concentratrice | Diamètre 5 m | 7 x 6 m$^2$ |
| Distance focale de la surface réflectrice concentratrice | 10m | 100 m |

(suite)

| PARAMETRES DES SIMULATIONS NUMERIQUES | Concentrateur parabolique | Héliostat focalisant |
|---|---|---|
| Ouverture numérique de la surface réflectrice concentratrice | F/2 | F/11 |
| Nombre de facettes | 18 | 4 x 2 |
| Dimensions des facettes | Diamètre 1 m | 1.4 x 2.8 m$^2$ |
| Surface balayée dans le plan cible | 0.1 x 0.1 m$^2$ | 0.7 x 0.7 m$^2$ |
| Nombre de points d'observation | 24 x 24 | 24 x 24 |
| Ecart-type des erreurs $\delta r$ d'orientation des facettes | 2 mrad | 0.5 mrad |
| Ecart-type des erreurs de rayon de courbure  } $\delta l$ | 0.5 m | - |
| Ecart-type des erreurs sur le coefficient d'asphérisation | 0.5 | - |

En prenant en compte l'ensemble des paramètres précédents, la figure 7b reproduit une séquence d'acquisition de 32 images L(M'mn,P) vues du plan cible, extraites de la séquence complète des 24 x 24 images simulées par un logiciel de tracé de rayons. Bien que tous les calculs numériques soient effectués ici avec une loi de luminance solaire uniforme, la figure 7b présente les images que l'on observerait en visant la pleine lune, afin d'aider à la compréhension et également pour un motif esthétique. Une séquence possible de balayage temporel est indiquée par des flèches sur la figure.

Les résultats obtenus pour le calcul des pentes suivant les axes X et Y et pour déterminer les défauts opto-mécaniques $\Delta(P)$, sont présentés dans la moitié supérieure de la table 2 ci-dessous. Ils y sont quantifiés en termes d'erreurs Pic-Vallée (PTV) et d'écarts-type (RMS) caractérisant les défauts optomécaniques réels (première colonne), ceux effectivement mesurés par le système (deuxième colonne), ainsi que leurs différences absolues et relatives (troisième et quatrième colonnes). Des vues de ces différentes cartes de défauts sont également représentées en fausses couleurs et en trois dimensions dans les figures 7c et 7d. Les résultats obtenus pour la mesure des pentes semblent particulièrement prometteurs, puisque les erreurs PTV et RMS sont inférieures à 15 et 6 % respectivement. Mais il est raisonnable d'espérer qu'au terme d'une nouvelle séquence de réalignement, puis de contrôle du concentrateur suivant la même procédure, ces chiffres pourront être encore améliorés de manière significative. On constate sur les cartes d'erreur de mesure présentées sur les panneaux supérieurs droits des figures 7c et 7d, que les erreurs locales de surface $\delta l$ et les erreurs d'orientation $\delta r$ ont disparu.

On a aussi remarqué que des erreurs de positionnement axial sur chacune des facettes de la surface réflectrice ("pistons") ne perturbent pas le calcul des pentes.

Table 2 :

| | REELS | | MESURES | | ERREURS DE MESURE | | ERREURS RELATIVES (%) | | |
|---|---|---|---|---|---|---|---|---|---|
| | PTV | RMS | PTV | RMS | PTV | RMS | PTV | RMS | |
| **Concentrateur parabolique** | 6.43 | 1.09 | 5.40 | 0.75 | 5.97 | 1.24 | 92.9 | 113.3 | $\Delta(P)$(mm) |
| | 6.20 | 1.10 | 6.81 | 1.10 | 0.84 | 0.12 | 13.5 | 10.7 | Pentes suivant X (mrad) |
| | 3.93 | 1.05 | 4.23 | 1.04 | 0.58 | 0.06 | 14.8 | 5.7 | Pentes suivant Y (mrad) |
| **Héliostat focalisant** | 10.52 | 1.77 | 6.92 | 1.03 | 5.27 | 0.75 | 50.1 | 42.6 | $\Delta(P)$(mm) |
| | 7.28 | 1.66 | 4.40 | 0.86 | 0.40 | 0.04 | 5.5 | 2.5 | Pentes suivant X (mrad) |
| | 5.88 | 1.31 | 4.40 | 1.01 | 0.35 | 0.05 | 6.0 | 3.9 | Pentes suivant Y (mrad) |

Pour conclure, les erreurs de mesure des défauts optomécaniques $\Delta(P)$ d'une surface concentratrice d'énergie solaire de grande ouverture numérique, telles qu'elles ont été simulées ici, semblent très satisfaisantes et compatibles avec les performances recherchées sur ce type d'installation.

Cas d'un héliostat focalisant :

Considérons une surface réflectrice d'un héliostat focalisant situé dans le champ d'une centrale à tour. Ce cas est plus général mais aussi plus complexe que celui des concentrateurs directement (ou indirectement dans le cas d'un four solaire éclairé par ses héliostats plans) pointés vers le soleil, car l'héliostat doit alors assurer une double fonction: d'une part, suivre le soleil dans son mouvement diurne dans le ciel, et d'autre part, assurer la concentration des rayons sur le récepteur (la chaudière) situé au sommet de la tour. La principale conséquence est que les vecteurs $\vec{S}$ et $\vec{N}$ repérant les directions du soleil et de la normale à surface réflectrice de l'héliostat (voir la figure 3a) sont amenés à changer constamment d'orientation : on n'a donc plus $\vec{S} = \vec{N} = \vec{R}$. La forme optimale de surface réflectrice de l'héliostat est alors définie empiriquement comme une parabole de rayon de courbure égal à deux fois sa distance à la chaudière. Mais ce type de surface réflectrice présente deux aberrations géométriques intrinsèques, dites de coma et d'astigmatisme, dont les amplitudes augmentent fortement avec les dimensions de l'héliostat et la valeur de l'angle d'incidence entre les vecteurs $\vec{S}$ et $\vec{N}$. En conséquence les relations (2) s'écrivent désormais:

$$\alpha \approx -\frac{x'_{mn}}{F} + 2\frac{\partial\Delta(P)}{\partial x} + \frac{\partial\Delta_{Coma}(P)}{\partial x} + \frac{\partial\Delta_{Astig}(P)}{\partial x}$$

$$\beta \approx -\frac{y'_{mn}}{F} + 2\frac{\partial\Delta(P)}{\partial y} + \frac{\partial\Delta_{Coma}(P)}{\partial y} + \frac{\partial\Delta_{Astig}(P)}{\partial y} \tag{6}$$

où les paramètres supplémentaires $\Delta_{Coma}(P)$ et $\Delta_{Astig}(P)$ désignent les aberrations "naturelles" de coma et d'astigmatisme de l'héliostat focalisant. Il est donc nécessaire d'éliminer ces aberrations lors du traitement de données. En pratique, cela implique de les soustraire aux pentes et défauts optomécaniques calculés durant les étapes D et E de la procédure de traitement de données décrite en relation avec l'organigramme de la figure 6. Le calcul des erreurs de front d'onde $\Delta_{Coma}(P) + \Delta_{Astig}(P)$ et de leurs pentes de référence c'est-à-dire en supposant la surface réflectrice de l'héliostat parfaitement sphérique et exempte d'erreurs d'orientation $\delta r$ et de surface $\delta l$, peut être effectué à l'aide des logiciels de tracé de rayons déjà utilisés pour simuler les images $L(M'_{mn},P)$ des figures 7b et 8a. Les cartes de référence dépendent évidemment des paramètres généraux de la configuration étudiée : position du soleil dans le ciel, emplacement de l'héliostat dans le champ de la centrale à tour, coordonnées de la cible, distance focale de la surface réflectrice de l'héliostat, etc.

Les principaux résultats obtenus sont présentés de la même manière que pour l'exemple précédent. Les paramètres géométriques de la surface réflectrice de l'héliostat sont donnés dans la troisième colonne de la table 1. Ici sont seulement introduites les erreurs d'orientation des facettes de la surface réflectrice de l'héliostat, d'écart type égal à 0.5 mrad. Afin de démontrer tout le potentiel de la méthode, on s'est placé dans une configuration géométrique plutôt défavorable, où les angles d'incidence solaire sur la surface réflectrice de l'héliostat sont de l'ordre de 25 degrés, générant ainsi de fortes aberrations naturelles de coma et d'astigmatisme. Une séquence d'images $L(M'_{mn},P)$ observées à la surface de l'héliostat visant la pleine lune est présentée sur la figure 8a.

Les erreurs de mesure des défauts optomécaniques $\Delta(P)$ et de leurs pentes suivant les axes X et Y en termes d'erreurs Pic-Vallée et RMS sont présentées dans la moitié inférieure de la table 2. Les vues en fausses couleurs et en trois dimensions des cartes d'erreur calculées sont reproduites dans les figures 8b et 8c. L'aspect général de ces figures est semblable à celui de la section précédente, à l'exception de leurs premières lignes montrant les aberrations naturelles de coma et d'astigmatisme de la surface réflectrice idéale de l'héliostat.

Enfin, les erreurs $\delta r$ de mesure des déréglages en altitude et en azimut des huit facettes de la surface réflectrice de l'héliostat focalisant effectuées au terme de deux itérations de la séquence de contrôle et de réglage, sont indiquées dans la table3. L'ensemble de ces chiffres et des représentations graphiques permet de tirer les conclusions suivantes:

- Les erreurs de mesure Pic-Vallée et RMS des pentes de la surface de l'héliostat focalisant sont encore meilleures que celles du concentrateur parabolique, étant respectivement inférieures à 6 et 4 %. Cela est probablement du en partie à la faible ouverture numérique de l'héliostat (ici F/11).

- De plus, les erreurs relatives sur les désalignements angulaires des facettes de la surface réflectrice de l'héliostat sont de l'ordre de 2 % Pic-Vallée et 1.5 % RMS, une excellente performance qu'il est probablement possible d'améliorer lors d'itérations supplémentaires. Cela ne semble toutefois pas vraiment nécessaire, car des résidus d'alignement inférieurs à 0.01 mrad sont largement négligeables par rapport au diamètre angulaire apparent du soleil (environ 10 mrad).

Table 3 :

| ERREURS D'ALIGNMENT $\delta r$ (mrad) | | ERREURS DE MESURE (mrad) | | ERREURS RELATIVES (%) | |
|---|---|---|---|---|---|
| Azimuth | Altitude | Azimuth | Altitude | Azimuth | Altitude |
| 0.31 | 0.42 | 0.00 | -0.01 | 0.20 | 2.37 |
| -0.216 | -0.233 | 0.002 | 0.002 | 1.0 | 1.0 |
| 0.233 | 0.225 | -0.012 | -0.002 | 5.4 | 0.7 |
| -0.199 | 0.313 | 0.009 | -0.010 | 4.6 | 3.3 |
| 0.153 | 0.204 | -0.002 | -0.002 | 1.5 | 0.8 |
| 0.020 | -0.046 | 0.000 | 0.001 | 1.5 | 1.9 |
| -0.135 | 0.266 | 0.005 | -0.014 | 3.8 | 5.2 |
| | **Erreurs RMS** | **0.006** | **0.006** | **2.0** | **1.5** |

Les simulations numériques présentées ici montrent que les précisions de mesure atteintes sont largement compatibles avec les performances attendues de ces différents types de systèmes concentrateurs d'énergie solaire.

Par rapport aux techniques déjà existantes, la solution selon l'invention qui est extrêmement adaptable, présente l'avantage essentiel de pouvoir être mise en oeuvre sur une installation en fonctionnement, sans perturber la production hélio-électrique dans le cas d'une installation solaire.

De plus, elle permet de raccourcir considérablement le temps de mise en service de l'installation, et est applicable aux principaux types de systèmes concentrateurs ponctuels d'énergie solaire existants (centrales à tour, concentrateurs directement pointés vers le soleil, fours solaires à double réflexion...). Cela permet par exemple de repérer les héliostats en cours de décrochage afin de les ramener en position de repos, par exemple pour un motif de sécurité aérienne.

Elle permet de contrôler et de régler l'ensemble des surfaces réflectrices de l'installation en un temps le plus court possible. En automatisant le processus de réglage, les interventions humaines se réduisent à un simple réajustement périodique des surfaces réflectrices à partir de valeurs numériques déterminées à l'avance. Dans le cas d'une centrale à tour, un objectif ambitieux mais atteignable est de pouvoir régler une centaine d'héliostats par jour. Ce temps minimal peut lui-même être réduit à un contrôle et réglage en temps réel lorsque les miroirs eux-mêmes sont équipés d'actuateurs commandables à distance à partir de l'unité de traitement en charge du contrôle.

## Revendications

1. Installation concentratrice de rayonnement cosmique provenant d'un objet céleste de rayon angulaire apparent non nul, équipée

   - d'une surface optique concentratrice (2) apte à réfléchir le rayonnement cosmique incident (3) vers une surface cible O'X'Y' pour y former une image dudit objet céleste, et susceptible de présenter des erreurs locales de surface et de pointage et d'orientation,
   - d'un système de contrôle de la surface optique réflectrice, **caractérisée en ce que** le système de contrôle comprend :
   - des moyens (4) d'acquisition d'images (5) de la surface optique selon différents points de vue M'$_{mn}$ (x'$_{mn}$, y'$_{mn}$) situés à l'intérieur de la tache de l'image de l'objet céleste dans la surface cible, m variant de 1 à M, n variant de 1 à N, de manière à obtenir M x N images de la surface optique éclairée par le rayonnement cosmique, avec M points de vue selon X' et N points de vue selon Y', avec M>1, N>1, M.N$\geq$30,
   - et une unité de traitement des M.N images acquises adaptée pour :

     o calculer les pentes $\delta\Delta(P)/\delta x$ et $\delta\Delta(P)/\delta y$ pour chaque point P(x,y) de la surface optique réflectrice selon :

$$\frac{\partial\Delta(P)}{\partial x} = g_X \ \varepsilon_0 \ \frac{\sum\limits_{m=1}^{M}\sum\limits_{n=1}^{N} \text{sign}(x'_{mn}) \ L(M'_{mn}, P)}{\sum\limits_{m=1}^{M}\sum\limits_{n=1}^{N} L(M'_{mn}, P)}$$

$$\frac{\partial \Delta(P)}{\partial y} = g_Y \; \varepsilon_0 \; \frac{\sum_{m=1}^{M} \sum_{n=1}^{N} \text{sign}(y'_{mn}) \; L(M'_{mn}, P)}{\sum_{m=1}^{M} \sum_{n=1}^{N} L(M'_{mn}, P)}$$

L(M'$_{mn}$, P) étant la luminance en un point de l'image correspondant au point P(x,y) de la surface optique réflectrice (2) observée selon le point de vue M'$_{mn}$, $\varepsilon_0$ le rayon angulaire apparent de l'objet céleste, g$_x$ et g$_y$ des coefficients prédéterminés, et

o déterminer à partir de ces pentes $\delta\Delta(P)/\delta x$ et $\delta\Delta(P)/\delta y$, une erreur locale de surface $\Delta P(x,y)$ au point P(x,y) de la surface optique réflectrice (2).

2. Installation concentratrice de rayonnement cosmique selon la revendication précédente, **caractérisée en ce que** les moyens (4) d'acquisition d'images selon différents points de vue comportent plusieurs dispositifs d'acquisition d'images respectivement situés en différentes positions fixes ou mobiles dans la surface cible.

3. Installation concentratrice de rayonnement cosmique selon l'une des revendications précédentes, **caractérisée en ce que** la surface optique réflectrice (2) à contrôler est orientable.

4. Installation concentratrice de rayonnement cosmique selon la revendication 1 prise en combinaison avec la revendication 3, **caractérisée en ce que** les moyens (4) d'acquisition d'images selon différents points de vue comportent au moins un dispositif d'acquisition d'image situé dans la surface cible et des moyens de modification de l'orientation de la surface optique réflectrice à contrôler.

5. Installation concentratrice de rayonnement cosmique selon l'une des revendications précédentes, **caractérisée en ce que** la surface optique réflectrice (2) est segmentée en facettes (21) et **en ce que** l'unité de traitement est adaptée pour déterminer en outre des erreurs d'orientation des facettes entre elles et une erreur de réglage de chaque facette.

6. Installation concentratrice de rayonnement cosmique selon l'une des revendications précédentes, **caractérisée en ce que** la surface optique réflectrice (2) est montée dans un héliostat.

7. Installation concentratrice de rayonnement cosmique selon l'une des revendications précédentes, **caractérisée en ce que** la surface optique réflectrice (2) est parabolique.

8. Installation concentratrice de rayonnement cosmique selon l'une des revendications précédentes, **caractérisée en ce qu'**elle comporte plusieurs surfaces optiques réflectrices (2).

9. Installation concentratrice de rayonnement cosmique selon l'une des revendications précédentes, **caractérisée en ce que** le rayonnement cosmique incident (3) est solaire ou lunaire.

10. Installation concentratrice de rayonnement cosmique selon l'une des revendications précédentes, **caractérisée en ce que** la surface cible est plane.

11. Centrale à tour ou concentrateur individuel ou four solaire à double réflexion ou télescope de Cherenkov comportant une installation concentratrice de rayonnement cosmique selon l'une des revendications précédentes.

**Patentansprüche**

1. Anlage zur Konzentration kosmischer Strahlung, die von einem Himmelsobjekt mit einem scheinbaren Winkelradius stammt, der sichtbar ungleich Null ist, ausgestattet mit

- einer konzentrierenden optischen Oberfläche (2), die dazu in der Lage ist, die kosmische Strahlung (3), die auf eine Zieloberfläche O'X'Y' einfällt, zu reflektieren, um dort ein Bild des Himmelsobjekts zu bilden, und dafür empfänglich ist, lokale Oberflächen- und Ausrichtungs- und Orientierungsfehler aufzuweisen,
- einem reflektierenden optischen Oberflächensteuerungssystem, **dadurch gekennzeichnet, dass** das Oberflächensteuerungssystem Folgendes umfasst:

- Mittel (4) zum Erwerb von Bildern (5) der optischen Oberfläche aus verschiedenen Blickwinkeln M'$_{mn}$ (x'$_{mn}$, y'$_{mn}$), die sich im Inneren des Bildflecks des Himmelsobjekts auf der Zieloberfläche befinden, wobei m von 1 bis M variiert, n von 1 bis N variiert, um M x N Bilder der optischen Oberfläche angestrahlt von der kosmischen Strahlung zu erhalten, mit M Blickwinkeln entlang X' und N Blickwinkeln entlang Y', wobei M>1, N>1, M.N$\geq$30,
- und einer Einheit zur Verarbeitung von M.N erworbenen Bildern, die angepasst ist zum:

  ○ Berechnen der Neigungen δΔ(P)/δx und δΔ(P)/δy für jeden Punkt P(x,y) der reflektierenden optischen Oberfläche, wobei:

$$\frac{\partial \Delta(P)}{\partial x} = g_X \, \varepsilon_0 \, \frac{\sum_{m=1}^{M} \sum_{n=1}^{N} \mathrm{sign}(x'_{mn}) \, L(M'_{mn}, P)}{\sum_{m=1}^{M} \sum_{n=1}^{N} L(M'_{mn}, P)}$$

$$\frac{\partial \Delta(P)}{\partial y} = g_Y \, \varepsilon_0 \, \frac{\sum_{m=1}^{M} \sum_{n=1}^{N} \mathrm{sign}(y'_{mn}) \, L(M'_{mn}, P)}{\sum_{m=1}^{M} \sum_{n=1}^{N} L(M'_{mn}, P)}$$

L(M'$_{mn}$, P) die Leuchtdichte an einem Bildpunkt ist, der dem Punkt P(x,y) der reflektierenden optischen Oberfläche (2) entspricht, betrachtet von dem Blickwinkel M'$_{mn}$, $\varepsilon_0$ der scheinbare Winkelradius des Himmelsobjekts ist, g$_x$ und g$_y$ zuvor festgelegte Koeffizienten sind, und

  ○ Bestimmen, ausgehend von diesen Neigungen δΔ(P)/δx und δΔ(P)/δy, eines lokalen Oberflächenfehlers ΔP(x,y) an dem Punkt P(x,y) der reflektierenden optischen Oberfläche (2).

2. Anlage zur Konzentration kosmischer Strahlung nach dem vorhergehenden Anspruch, **dadurch gekennzeichnet, dass** die Mittel (4) zum Erwerb von Bildern aus verschiedenen Blickwinkeln eine Vielzahl von Vorrichtungen zum Erwerb von Bildern beinhalten, die sich jeweils an unterschiedlichen festen oder beweglichen Positionen auf der Zieloberfläche befinden.

3. Anlage zur Konzentration kosmischer Strahlung nach einem der vorhergehenden Ansprüche, **dadurch gekennzeichnet, dass** die zu prüfende reflektierende optische Oberfläche (2) orientierbar ist.

4. Anlage zur Konzentration kosmischer Strahlung nach Anspruch 1 in Kombination mit Anspruch 3, **dadurch gekennzeichnet, dass** die Mittel (4) zum Erwerb von Bildern aus verschiedenen Blickwinkeln mindestens eine Vorrichtung zum Erwerb von Bildern, die sich auf der Zieloberfläche befindet und Mittel zur Modifikation der Orientierung der zu prüfenden reflektierenden optischen Oberfläche beinhalten.

5. Anlage zur Konzentration kosmischer Strahlung nach einem der vorhergehenden Ansprüche, **dadurch gekennzeichnet, dass** die reflektierende optische Oberfläche (2) in Rautenflächen (21) segmentiert ist und dass die Einheit zur Verarbeitung angepasst ist, um ferner Orientierungsfehler der Rautenflächen zwischen einander und einen Einstellungsfehler jeder Rautenfläche zu bestimmen.

6. Anlage zur Konzentration kosmischer Strahlung nach einem der vorhergehenden Ansprüche, **dadurch gekennzeichnet, dass** die reflektierende optische Oberfläche (2) in einem Heliostaten angebracht ist.

7. Anlage zur Konzentration kosmischer Strahlung nach einem der vorhergehenden Ansprüche, **dadurch gekennzeichnet, dass** die reflektierende optische Oberfläche (2) parabolisch ist.

8. Anlage zur Konzentration kosmischer Strahlung nach einem der vorhergehenden Ansprüche, **dadurch gekennzeichnet, dass** sie mehrere reflektierende optische Oberflächen (2) beinhaltet.

9. Anlage zur Konzentration kosmischer Strahlung nach einem der vorhergehenden Ansprüche, **dadurch gekennzeichnet, dass** die einfallende kosmische Strahlung (3) solar oder lunar ist.

**10.** Anlage zur Konzentration kosmischer Strahlung nach einem der vorhergehenden Ansprüche, **dadurch gekennzeichnet, dass** die Zieloberfläche eben ist.

**11.** Turmkraftwerk oder individueller Konzentrator oder Solarofen mit doppelter Reflexion oder Cherenkov-Teleskop, beinhaltend eine Anlage zur Konzentration kosmischer Strahlung nach einem der vorhergehenden Ansprüche.

**Claims**

**1.** An Installation for concentrating cosmic radiation originating from a celestial object with a non-zero apparent angular radius, comprising

- a concentrating optical surface (2) able to reflect incident cosmic radiation (3) toward a target surface O'X'Y' so as to form an image of said celestial object here, and liable to contain local surface errors and aiming and orientation errors,
- a system for inspecting the reflective optical surface, **characterised in that** the inspecting system comprises:
- means (4) for acquiring images (5) of the optical surface from various viewpoints $M'_{mn}$ ($x'_{mn}$, $y'_{mn}$) that are located inside the image mark of the celestial object in the target surface, m varying from 1 to M, and n varying from 1 to N, so as to obtain M x N images of the optical surface illuminated by the cosmic radiation, with M viewpoints along X' and N viewpoints along Y', where M>1, N>1 and M.N≥30,
- and a unit for processing the M.N acquired images, which unit is suitable for:

  ∘ calculating the slopes $\delta\Delta(P)/\delta x$ and $\delta\Delta(P)/\delta y$ for each point P(x,y) of the reflective optical surface, where:

$$\frac{\partial\Delta(\mathbf{P})}{\partial x} = g_X\ \varepsilon_0\ \frac{\sum_{m=1}^{M}\sum_{n=1}^{N} \text{sign}(x'_{mn})\ L(M'_{mn}, P)}{\sum_{m=1}^{M}\sum_{n=1}^{N} L(M'_{mn}, P)}$$

$$\frac{\partial\Delta(\mathbf{P})}{\partial y} = g_Y\ \varepsilon_0\ \frac{\sum_{m=1}^{M}\sum_{n=1}^{N} \text{sign}(y'_{mn})\ L(M'_{mn}, P)}{\sum_{m=1}^{M}\sum_{n=1}^{N} L(M'_{mn}, P)}$$

L($M'_{mn}$, P) being the luminance at a point of the image corresponding to the point P(x,y) of the reflective optical surface (2) observed from the viewpoint $M'_{mn}$, $\varepsilon_0$ the apparent angular radius of the celestial object and $g_x$ and $g_y$ pre-set coefficients, and

∘ determining from these slopes $\delta\Delta(P)/\delta x$ and $\delta\Delta(P)/\delta y$, a local surface error $\Delta P(x,y)$ at the point P(x,y) of the reflective optical surface (2).

**2.** The installation for concentrating cosmic radiation according to the preceding claim, **characterised in that** the means (4) for acquiring images from various viewpoints include a plurality of devices for acquiring images, which devices are respectively located at various fixed or movable positions on the target surface.

**3.** The installation for concentrating cosmic radiation according to either of the preceding claims, **characterised in that** the reflective optical surface (2) to be inspected is orientable.

**4.** The installation for concentrating cosmic radiation according to Claim 1 taken in combination with Claim 3, **characterised in that** the means (4) for acquiring images from various viewpoints include at least one image-acquiring device located on the target surface and means for modifying the orientation of the reflective optical surface to be inspected.

**5.** The installation for concentrating cosmic radiation according to any of the preceding claims, **characterised in that** the reflective optical surface (2) is segmented into facets (21) and **in that** the processing unit is suitable for furthermore determining errors in the orientation of the facets with respect to one another and an adjustment error of each facet.

6. The installation for concentrating cosmic radiation according to any of the preceding claims, **characterised in that** the reflective optical surface (2) is mounted in a heliostat.

7. The installation for concentrating cosmic radiation according to any of the preceding claims, **characterised in that** the reflective optical surface (2) is parabolic.

8. The installation for concentrating cosmic radiation according to any of the preceding claims, **characterised in that** it includes a plurality of reflective optical surfaces (2).

9. The installation for concentrating cosmic radiation according to any of the preceding claims, **characterised in that** the incident cosmic radiation (3) is solar or lunar.

10. The installation for concentrating cosmic radiation according to any of the preceding claims, **characterised in that** the target surface is planar.

11. A central-tower power plant or individual concentrator or double-reflection solar furnace or Cherenkov telescope including an installation for concentrating cosmic radiation according to any of the preceding claims.

FIG.1a

FIG.1b

Rayons solaires incidents

$2\varepsilon_0$

3

Concentrateur fixe

40m

2a

2b

1

18m

## FIG.1c

21

$\delta_l$

2

$O_i$

$\delta_p$

$\delta_r$

21

$O_j$

- - - - Surface idéale

## FIG.2

β

γ

α

α β

Repère du Disque
objet céleste

Y

$\vec{S}$

P x

y

X

$\vec{Z}$ Z

O

$\vec{N}$

$\vec{R}$

Y' Repère du Plan
cible

x' M'

y'

X'

O'

Z'

Repère de la Surface
concentrique

## FIG.3a

Images de la surface
concentratrice

$L(M'_{21}, P)$ Y $L(M'_{22}, P)$

X

Repère du
Plan cible

Y'

M'$_{21}$ x' M'$_{22}$

y'

O' X'

$L(M'_{11}, P)$ $L(M'_{12}, P)$

M'$_{11}$ M'$_{12}$

Tache
Image de
l'objet
céleste

Y

x

y P

X

F

O

Repère de la
Surface
concentratrice

## FIG.3b

FIG.4a

FIG.4b

FIG.4c

FIG.4d

L(M',P)

M'$_{11}$  M'$_{12}$

Soleil
Gaussien

$2\delta x'/F$

$2\varepsilon_0$

## FIG.5a

L(M',P)

M'$_{m1}$ → M'$_{mN}$

Soleil
uniforme

Soleil
fictif

$2\varepsilon_0$

$2\delta x'/F$

## FIG.5b

A — Réorganisation de la séquence
d'images acquises (si nécessaire)

B — Accumulation des images
et calcul des différentielles
suivant X et Y

C — Lissage des fonctions
précédentes (optionnel)

D — Calcul des pentes
de la surface
suivant X et Y

E — Détermination des défauts
ΔP à partir des pentes

F — Calcul direct des erreurs
δr de réglage

G — Calcul des erreurs
δr, δp, δl

Instructions pour les
opérateurs de la centrale

## FIG.6

FIG.7a

FIG.7b

FIG.7c

Réels                     Mesurés                     Erreurs
de mesure

FIG.7d

FIG.8a

**FIG.8b**

Erreurs de
front d'onde

Pentes
suivant l'axe X

Pentes
suivant l'axe Y

FIG.8c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013202215 A
- US 5982481 A
- US 7667833 B

**Littérature non-brevet citée dans la description**

- **F. HÉNAULT ; C. ROYÈRE.** Concentration du rayonnement solaire : analyse et évaluation des réponses impulsionnelles et des défauts de réglage de facettes réfléchissantes. *J. Optics,* 1989, vol. 20 (5), 225-240
- Wave-front estimation from wave-from slope measurements. *J. Opt. Soc. Am.,* vol. 70, 998-1006